(19)

Europäisches
Patentamt
European
Patent Office
Office européen
des brevets

(11) **EP 4 753 256 A1**

(12) **EUROPEAN PATENT APPLICATION**

(43) Date of publication:
**03.06.2026 Bulletin 2026/23**

(21) Application number: **24315540.5**

(22) Date of filing: **27.11.2024**

(51) International Patent Classification (IPC):
*H04N 19/11* (2014.01)     *H04N 19/147* (2014.01)
*H04N 19/176* (2014.01)     *H04N 19/593* (2014.01)

(52) Cooperative Patent Classification (CPC):
**H04N 19/11; H04N 19/147; H04N 19/176;
H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing Beijing 100085 (CN)**

(72) Inventors:
• **Ghaznavi Youvalari, Ramin
Beijing, 100085 (CN)**
• **Abdoli, Mohsen
Beijing, 100085 (CN)**
• **Tissier, Alexandre
Beijing, 100085 (CN)**
• **Plowman, Frank
Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

Remarks:
Amended claims in accordance with Rule 137(2)
EPC.

(54) **METHOD AND APPARATUS FOR PROCESING A PICTURE USING A MATRIX-BASED AND/OR
A NON-MATRIX-BASED INTRA PREDICTION METHOD**

(57)     A method of processing one or more blocks of a picture selects one of a matrix-based intra prediction method and a non-matrix-based intra prediction method, and using the selected prediction method for predicting a block of the picture, or combines a matrix-based intra prediction method and a non-matrix-based intra prediction method and using the combined prediction method for predicting a block of the picture.

Fig. 6

**Description**

**Technical Field**

The present disclosure generally relates to the field of encoding/decoding pictures, images or videos, and embodiments of the present disclosure concern improvements regarding a prediction. More specific embodiments of the present disclosure relate to the use of a matrix-based intra prediction method and/or a non-matrix-based intra prediction method improvements for processing one or more blocks of a picture.

**Background**

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding of a picture, a matrix-based intra prediction method or a non-matrix-based intra prediction method may be used. The matrix-based intra prediction method may include a Matrix weighted Intra Prediction (MIP) method or a Matrix-based position-dependent prediction (MPDP) method, and the non-matrix-based intra prediction method may include an angular Intra Prediction Mode (IPM) method or a non-angular Intra Prediction Mode (IPM) method.

Thus, there is a need to provide further improvements for processing a picture, an image or a video, e.g., when encoding and/or decoding of the picture, the image or the video.

**Summary**

The present disclosure provides a method of processing one or more blocks of a picture, the method comprising:

selecting one of a matrix-based intra prediction method and a non-matrix-based intra prediction method, and using the selected prediction method for predicting a block of the picture, or
combining a matrix-based intra prediction method and a non-matrix-based intra prediction method and using the combined prediction method for predicting a block of the picture.

Optionally, the method comprises: determining that the matrix-based intra prediction method is allowed.

Optionally, the method comprises: determining whether using the matrix-based intra prediction method is allowed, and, if using the matrix-based intra prediction method is allowed, selecting one of the matrix-based intra prediction method and the non-matrix-based intra prediction method, or combining the matrix-based intra prediction method and the non-matrix-based intra prediction method.

Optionally, at an encoder, the prediction method is selected based on a performance of the matrix-based intra prediction method and the non-matrix-based intra prediction method, e.g., by using a rate-distortion optimization (RDO), and an indication of the selected prediction method, e.g., a flag or an index, is included into a data stream.

Optionally, an indication, e.g., a flag or an index, is obtained from a data stream, the indication is an explicit indication of the matrix-based intra prediction method or of the non-matrix-based intra prediction method, and for predicting the block, the prediction method is used which is explicitly signaled by the indication.

Optionally, an indication, e.g., a flag or an index, is obtained from a data stream, the indication indicates an intra prediction mode for predicting the block, and for predicting the block, the prediction method, which causes the lowest template costs and matches the indicated intra prediction mode, is selected from one or more matrix-based intra prediction methods and one or more non-matrix-based intra prediction methods.

Optionally,

at a decoder, an indication, e.g., a flag or an index, is obtained from a data stream, and the prediction method to be used for predicting the block is determined using the indication, and
the prediction method to be used for predicting the block is determined using

- the indication only, wherein the indication is an explicit indication of the matrix-based intra prediction method or of the non-matrix-based intra prediction method, or
- the indication and template costs of the matrix-based intra prediction method and the non-matrix-based intra prediction method, wherein the indication may be a certain value referring to either one of the matrix-based intra prediction method or the non-matrix-based intra prediction method

Optionally, the method comprises:

- parsing the data stream for the explicit indication, e.g., a bitstream which includes data representing the picture,
- determining whether the explicit indication indicates the matrix-based intra prediction method or the non-matrix-based intra prediction method,
- if the explicit indication indicates the matrix-based intra prediction method, performing the matrix-based intra prediction method for obtaining a prediction signal for the block, and
- if the explicit indication indicates the non-matrix-based intra prediction method, performing the non-matrix-based intra prediction method for obtaining the prediction signal for the block.

Optionally, the method comprises:

- parsing the data stream for the indication, e.g., a bitstream which includes data representing the picture,
- determining, using the indication and the template costs of the matrix-based intra prediction method and the non-matrix-based intra prediction method, whether the indication indicates the matrix-based intra prediction method or the non-matrix-based intra prediction method,
- if the indication indicates the matrix-based intra prediction method, performing the matrix-based intra prediction method for obtaining a prediction signal for the block, and
- if the indication indicates the non-matrix-based intra prediction method, performing the non-matrix-based intra prediction method for obtaining the prediction signal for the block.

Optionally, the template costs of the matrix-based intra prediction method and the non-matrix-based intra prediction method are determined by

- applying the matrix-based intra prediction method and the non-matrix-based intra prediction method to template samples of the block for re-predicting the template samples,
- determining template prediction distortion costs of each prediction method compared to reconstructed template samples, and
- selecting the prediction method having the lowest template prediction distortion costs and referring to the intra prediction mode indicated by the indication parsed from the data stream.

Optionally, the template costs of the matrix-based intra prediction method and the non-matrix-based intra prediction method are determined by

- applying the matrix-based intra prediction method and the non-matrix-based intra prediction method to template samples of the block for re-predicting the template samples,
- determining template prediction distortion costs of each prediction method compared to reconstructed template samples,
- sorting the prediction methods in descending order of the template prediction distortion costs, and
- selecting the prediction method that refers to the indication parsed from the data stream.

Optionally, e.g., at a decoder, for predicting the block, the prediction method, which causes the lowest template costs, is selected from one or more matrix-based intra prediction methods and one or more non-matrix-based intra prediction methods.

Optionally, at a decoder, the prediction method to be used for predicting the block is determined by

- determining, using the template costs of the matrix-based intra prediction method and the non-matrix-based intra prediction method, whether the matrix-based intra prediction method or the non-matrix-based intra prediction method is to be used for the prediction,
- if the matrix-based intra prediction method is to be used, performing the matrix-based intra prediction method for obtaining a prediction signal for the block, and
- if the non-matrix-based intra prediction method is to be used, performing the non-matrix-based intra prediction method for obtaining the prediction signal for the block.

Optionally, the template costs of the matrix-based intra prediction method and the non-matrix-based intra prediction method are determined by

- applying the matrix-based intra prediction method and the non-matrix-based intra prediction method to template samples of the block for re-predicting the template samples,

- determining template prediction distortion costs of each prediction method compared to reconstructed template samples, and
- selecting the prediction method having the lowest template prediction distortion costs.

Optionally, the reconstructed template samples are from a template area above and/or left of the block, and wherein the template areas for determining the template prediction distortion costs are the same.

Optionally, the reconstructed template samples are from a template area above and/or left of the block, and wherein the template areas for determining the template prediction distortion costs are different, and wherein the determined template prediction distortion costs are normalized on a number of pixels in each template area.

Optionally, wherein the matrix-based intra prediction method and the non-matrix-based intra prediction method are combined at a decoder using respective blending weights, e.g., by

- generating for the block in a certain intra prediction mode, IPM, a first prediction obtained by the non-matrix-based intra prediction method, and a second prediction obtained by the matrix-based intra prediction method, and
- blending the first and second predictions using the respective blending weights.

Optionally, the blending weights are

- fixed, or
- signaled in a data stream, with the blending weights decided at an encoder, e.g., by using a rate-distortion optimization (RDO), or
- selected at an encoder from a set of blending weights predefined in a codec, e.g., by using a rate-distortion optimization (RDO) for selecting the best performing blending weights among the set, and wherein an index of the selected blending weights is signaled in a data stream, or
- implicitly determined at the decoder using distortion costs of the non-matrix-based intra prediction method and the matrix-based intra prediction method over a template area of the block.

Optionally, combining the matrix-based intra prediction method and the non-matrix-based intra prediction method is

- applied always when either one of the matrix-based intra prediction method and the non-matrix-based intra prediction method is selected for the block, or
- enabled/disabled explicitly, e.g., using a block level flag in a data stream, or enabled implicitly at the decoder using template costs of the matrix-based intra prediction method and the non-matrix-based intra prediction method.

The present disclosure provides a non-transitory computer-readable storage medium comprising instructions which, when executed by a computer, cause the computer to carry out the method of the present disclosure.

The present disclosure provides an apparatus of processing one or more blocks of a picture, the apparatus comprising: a processing module, wherein the processing module is configured to

- select one of a matrix-based intra prediction method and a non-matrix-based intra prediction method, and use the selected prediction method for predicting a block of the picture, or
- combine a matrix-based intra prediction method and a non-matrix-based intra prediction method and use the combined prediction method for predicting a block of the picture.

The technical solutions provided according to embodiments of the present disclosure have the following beneficial effects.

In prior art approaches, a matrix-based prediction, like the matrix-based position-dependent prediction (MPDP) in ECM software, is used when certain criteria are met, and when used, it always replaces any conventional or non-matrix-based prediction. Always replacing a conventional or non-matrix-based prediction by a matrix-based prediction may result in a sub-optimal block prediction, e.g., in cases where the MPDP does not provide for an as accurate prediction as the conventional prediction mode or method.

Embodiments of the present disclosure provide various approaches for improving a prediction performance by appropriately utilizing a matrix-based prediction, like MPDP, and a conventional or non-matrix-based prediction intra prediction for a coding block. Embodiments address the drawbacks in conventional approaches by providing an approach, which, in addition to the determination whether the certain criteria for using a matrix-based prediction are met, further determines, in case the criteria for use of the matrix-based prediction are met, which of the matrix-based prediction and the non-matrix-based prediction performs better for predicting a block of a picture, and then applies the better performing prediction on the block. Other embodiments of the present disclosure address the drawbacks in conventional approaches by combining the matrix-based prediction and the non-matrix-based prediction.

The present disclosure is advantageous as the prediction performance is improved by appropriately making use of a matrix-based prediction and/or a non-matrix-based prediction intra prediction.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

| | |
|---|---|
| Fig. 1 | is a block diagram of a conventional video encoder, |
| Fig. 2 | is a block diagram of a conventional video decoder, |
| Fig. 3 | illustrates template-based intra mode derivation (TIMD) templates for a cost calculation or determination, |
| Fig. 4 | illustrates a matrix weighted intra prediction (MIP) process, |
| Fig. 5 | illustrates a L shaped neighborhood for a given predicted block, |
| Fig. 6 | illustrates a flow diagram of a method of processing one or more blocks of a picture in accordance with embodiments of the present disclosure, |
| Fig. 7 | illustrates a decoder side process of explicit signaling in accordance with an embodiment of the present disclosure, |
| Fig. 8 | illustrates a decoder side process of explicit signaling with a template-based reordering mechanism in accordance with an embodiment of the present disclosure, |
| Fig. 9(A)-Fig. 9(B) | illustrate examples of a template prediction using a MPDP method, |
| Fig. 10 | illustrates an example of a template prediction using a conventional prediction method, such as TIMD, |
| Fig. 11 | illustrates a decoder side process of an implicit, template-based derivation for an MPDP or a conventional prediction in accordance with an embodiment of the present disclosure |
| Fig. 12 | illustrates a flow diagram of a method for decoding an encoded data stream in accordance with embodiments of the present disclosure, |
| Fig. 13 | illustrates a flow diagram of a method for encoding a picture into an encoded data stream in accordance with embodiments of the present disclosure, |
| Fig. 14 | illustrates a block diagram of an apparatus of processing one or more blocks of a picture in accordance with embodiments of the present disclosure, |
| Fig. 15 | illustrates a block diagram of a decoder for decoding an encoded data stream in accordance with embodiments of the present disclosure, |
| Fig. 16 | illustrates a block diagram of an encoder for encoding a picture into an encoded data stream in accordance with embodiments of the present disclosure, |
| Fig. 17 | illustrates a data stream in accordance with embodiments of the present disclosure, and |
| Fig. 18 | illustrates a block diagram illustrating an electronic device according to embodiments of the present disclosure. |

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

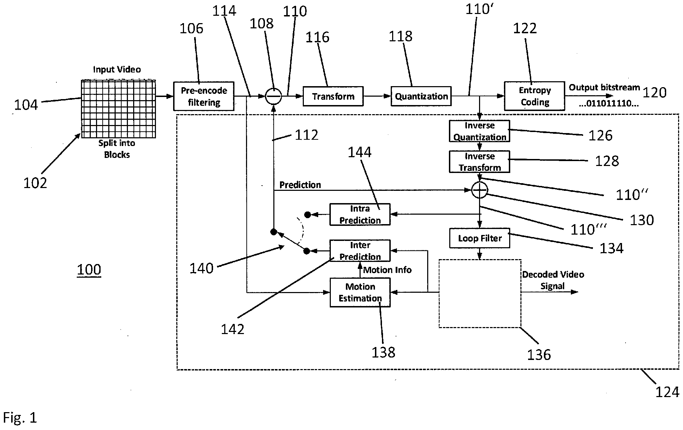

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110''' that may serve as a reference data for predicting future CUs or blocks to encode. The quantized transform coefficients 110' are de-quantized and inverse transformed leading to a decoded prediction CU or block 110'', and the decoded prediction residuals and the predicted block are then combined at 130, typically summed, so as to provide the reconstructed block or CU 110'''. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

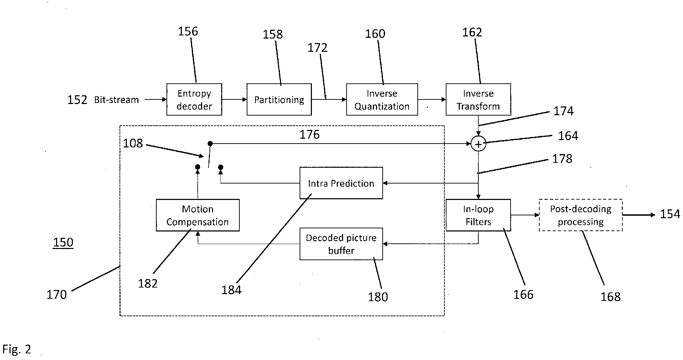

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Description of relevant tools in Enhanced Compression Model (ECM)

A brief description of relevant ECM tools is provided here. More information may be obtained from the JVET-AG2025 and JVE T - T 2002 documents.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination

$$Orient = G_y/G_x$$

is obtained, e.g., computed by the following LUT-based scheme:

$$x = \text{Floor}( \text{Log2}( Gx ) )$$

$$\text{normDiff} = ( ( Gx << 4 ) >> x ) \& 15$$

$$x += ( 3 + ( \text{normDiff} \: != \: 0 ) ? 1 : 0 )$$

$$Orient = (Gy* ( \text{DivSigTable}[ \text{normDiff} ] \,|\, 8 ) + ( 1 << ( x\text{-}1 ) )) >> x$$

where

$$\text{DivSigTable}[16] = \{ 0, 7, 6, 5, 5, 4, 4, 3, 3, 2, 2, 1, 1, 1, 1, 0 \}.$$

For a block of size $W \times H$, the weight for each of the five derived modes is modified if one of the above or left histogram magnitudes is twice as large as the other one. In this case, the weights are location dependent and computed as follows:

If the above histogram is twice the left, then:

$$w_i(x, y) = wDimd_i + \Delta_i - 2\Delta_i \frac{y}{(H-1)} .$$

If the left histogram is twice the above, then:

$$w_i(x, y) = wDimd_i + \Delta_i - 2\Delta_i \frac{x}{(W-1)},$$

where *wDimd_i* is the unmodified uniform weight of the DIMD selected as in JVET-O0449, $\Delta_i$ is pre-defined and set to 10.

The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Fusion for template-based intra mode derivation (TIMD)*

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:

- The non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost:

$$weight_i = \frac{sumSATD - costMode_i}{2 \times sumSATD}, \quad sumSATD = \sum_{j=1}^{3} costMode_i.$$

Otherwise, the non-angular intra prediction mode is not used in the prediction.

The costs of the two selected modes are compared with a threshold, and the cost factor of 2 may be applied as follows:

$$costMode2 < 2*costMode1.$$

If this condition is true, the fusion is applied, otherwise only mode1 is used.

The weights of the modes are computed from their SATD costs as follows:

$$weight1 = costMode2 / (costMode1 + costMode2)$$

$$weight2 = 1 - weight1$$

The division operations are conducted using the same lookup table (LUT) based integerization scheme used by the CCLM.

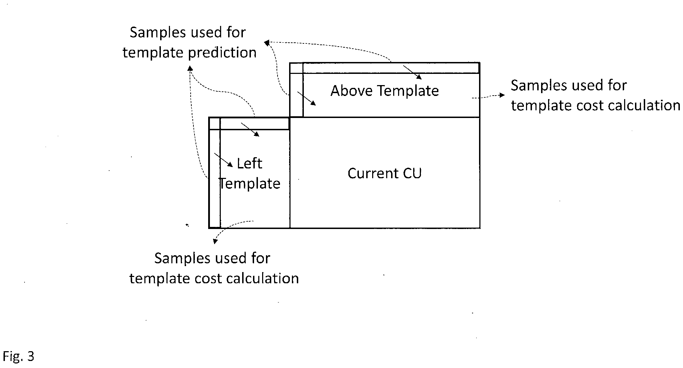

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 3 illustrating the TIMD templates for the cost determination or calculation.

*Angular Intra Prediction Mode (IPM) in VVC and ECM*

There exists a set of 67 Intra Prediction Modes (IPMs) in both VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,...,-1 and 67,68,...,80), depending on block characteristics such as width/height ratio.

*Matrix weighted Intra Prediction (MIP)*

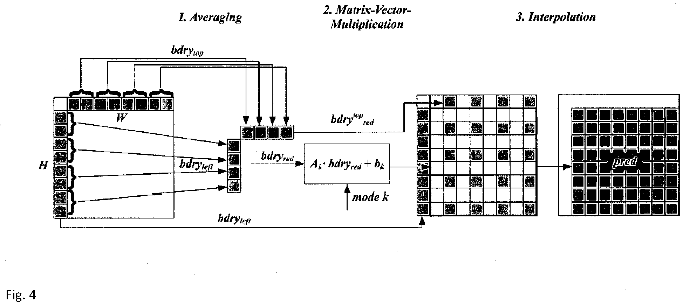

The matrix weighted intra prediction (MIP) method is an intra prediction technique in VVC. For predicting the samples of a rectangular block of width W and height H, the matrix weighted intra prediction (MIP) takes one line of H reconstructed neighboring boundary samples left of the block and one line of W reconstructed neighbouring boundary samples above the block as input. If the reconstructed samples are unavailable, they are generated as it is done in conventional intra prediction. Fig. 4 illustrates a matrix weighted intra prediction (MIP) process which generates the prediction signal based on the following three steps:

1. Averaging.
2. Matrix-Vector-Multiplication.
3. Linear Interpolation.

Averaging neighboring samples

Among the boundary samples, four samples or eight samples are selected by averaging based on block size and shape. The input boundaries *bdry*$^{top}$ and *bdry*$^{left}$ are reduced to smaller boundaries $bdry_{red}^{top}$ and $bdry_{red}^{left}$ by averaging neighboring boundary samples according to a predefined rule dependent on the block size. Then, the two reduced boundaries $bdry_{red}^{top}$ and $bdry_{red}^{left}$ are concatenated to a reduced boundary vector *bdry*$_{red}$ which is thus of size four for blocks of shape 4 × 4 and of size eight for blocks of all other shapes. If *mode* refers to the MIP-mode, this concatenation is defined as follows:

$$bdry_{red} = \begin{cases} \left[bdry_{red}^{top}, bdry_{red}^{left}\right] & \text{for } W = H = 4 \text{ and } mode < 18 \\ \left[bdry_{red}^{left}, bdry_{red}^{top}\right] & \text{for } W = H = 4 \text{ and } mode \geq 18 \\ \left[bdry_{red}^{top}, bdry_{red}^{left}\right] & \text{for } \max(W, H) = 8 \text{ and } mode < 10 \\ \left[bdry_{red}^{left}, bdry_{red}^{top}\right] & \text{for } \max(W, H) = 8 \text{ and } mode \geq 10 \\ \left[bdry_{red}^{top}, bdry_{red}^{left}\right] & \text{for } \max(W, H) > 8 \text{ and } mode < 6 \\ \left[bdry_{red}^{left}, bdry_{red}^{top}\right] & \text{for } \max(W, H) > 8 \text{ and } mode \geq 6. \end{cases}$$

Matrix Multiplication

A matrix vector multiplication, followed by addition of an offset, is carried out with the averaged samples as an input. The result is a reduced prediction signal on a subsampled set of samples in the original block. Out of the reduced input vector *bdry*$_{red}$ a reduced prediction signal *pred*$_{red}$, which is a signal on the down-sampled block of width $W_{red}$ and height $H_{red}$ is generated. Here, $W_{red}$ and $H_{red}$ are defined as:

$$W_{red} = \begin{cases} 4 & \text{for } \max(W, H) \leq 8 \\ \min(W, 8) & \text{for } \max(W, H) > 8 \end{cases}$$

$$H_{red} = \begin{cases} 4 & \text{for } \max(W, H) \leq 8 \\ \min(H, 8) & \text{for } \max(W, H) > 8 \end{cases}$$

The reduced prediction signal *pred*$_{red}$ is obtained by determining or calculating a matrix vector product and adding an offset:

$$pred_{red} = A \cdot bdry_{red} + b$$

*A* is a matrix that has $W_{red} \cdot H_{red}$ rows and 4 columns if $W = H = 4$ and 8 columns in all other cases. *b* is a vector of the size $W_{red} \cdot H_{red}$. The matrix *A* and the offset vector b are taken from one of the following sets $S_0$, $S_1$, $S_2$, with an index *idx* = *idx*(*W, H*) defined as follows:

$$idx(W,H) = \begin{cases} 0 & for\ W = H = 4 \\ 1 & for\ max(W,H) = 8 \\ 2 & for\ max(W,H) > 8. \end{cases}$$

Each coefficient of the matrix A is represented with an 8 bit precision. The set $S_0$ consists of or includes 16 matrices $A_0^i$, $i \in \{0, ..., 15\}$ each of which has 16 rows and 4 columns and 16 offset vectors $b_0^i$, $i \in \{0, ... 16)$ each of the size 16. Matrices and offset vectors of that set are used for blocks of size $4 \times 4$. The set $S_1$ consists of or includes 8 matrices $A_1^i$, $i \in \{0, ..., 7\}$, each of which has 16 rows and 8 columns and 8 offset vectors $b_1^i$, $i \in \{0, ..., 7\}$ each of the size 16. The set $S_2$ consists of or includes 6 matrices $A_2^i$, $i \in \{0, ..., 5\}$, each of which has 64 rows and 8 columns and of 6 offset vectors $b_2^i$, $i \in \{0, ..., 5\}$ of the size 64.

Interpolation

The prediction signal at the remaining positions is generated from the prediction signal on the subsampled set by linear interpolation which is a single step linear interpolation in each direction. The interpolation is performed first in the horizontal direction and then in the vertical direction regardless of block shape or block size.

Signaling of MIP mode and harmonization with other coding tools

For each Coding Unit (CU) in intra mode, a flag indicating whether an MIP mode is to be applied or not is sent. If an MIP mode is to be applied, MIP mode (*predModeIntra*) is signaled. For an MIP mode, a transposed flag (*isTransposed*), which determines whether the mode is transposed, and a MIP mode Id (*modeId*), which determines which matrix is to be used for the given MIP mode, is derived as follows:

$$isTransposed = predModeIntra\&1$$

$$modeId = predModeIntra \gg 1$$

The MIP coding mode is harmonized with other coding tools by considering one or more of the following aspects:

- A Low-Frequency Non-Separable Transform (LFNST) is enabled for the MIP on large blocks. Here, the LFNST transforms of planar mode are used.
- The reference sample derivation for the MIP is performed exactly as for conventional or non-matrix-based intra prediction modes.
- For the up-sampling step used in the MIP prediction, original reference samples are used instead of down-sampled ones.
- Clipping is performed before up-sampling and not after up-sampling.
- MIP is allowed up to a block size of 64x64 regardless of the maximum transform size.
- The number of MIP modes is 32 for sizeId=0, 16 for sizeId=1 and 12 for sizeId=2.

*Matrix-based position-dependent prediction (MPDP) replacing existing conventional intra modes in ECM*

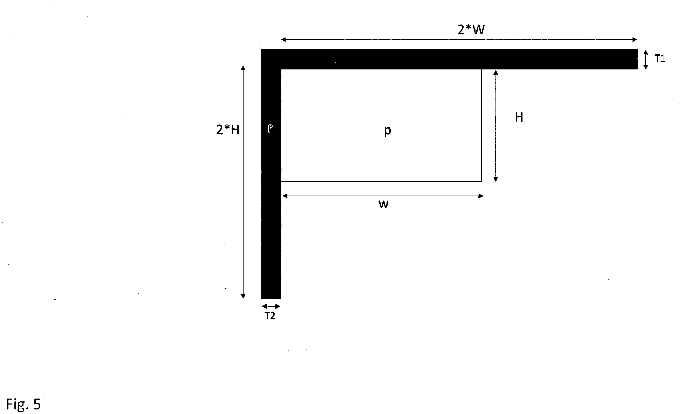

A matrix of weights, which are defined for a block shape and intra mode, is introduced in JVET-AH0209. Those weights are multiplied by the neighbor reference template to derive the prediction samples replacing conventional intra prediction. The weights are applied to the reference samples of the L shaped causal neighborhood template as shown in Fig. 5 illustrating a L shaped neighborhood for a given predicted block.

The reference samples in the causal neighborhood are denoted as r, and F(x,y) is the matrix of weights. Then the prediction P(x,y) can be derived as

$$P(x,y) = \sum_k F(x,y,k)*r(k),$$

where k denotes the index of the reference sample in the template.

This prediction is used for block sizes with both width and height up to 32 (except for 4x32,32x4, 8x32 and 32x8). The template size is 2 for blocks with both width and height up to 16 and it is only used for mode 0, 1, and (2+2*n) where n is from 0 to 32. For other blocks, the template size is set to 1 and is used for mode 0, 1, and (2+4*n). The prediction is only performed for 16x16 positions, and the rest of the samples are generated by bilinear interpolation. For all block sizes, the block shape and the mode-based symmetry is used. A reference length is set to W and H for modes greater than 18 and less than 50 and set to 2*W and 2*H otherwise.

*Modifications to matrix-based intra prediction (MIP) in ECM*

In document JVET-AI0208, matrix sizes of the MIP modes are increased for the blocks with sizes up to 32x32, excluding of 4x32, 32x4, 8x32 and 32x8. The matrices use the L-shaped causal template illustrated in Fig. 5 as input to generate the WxH prediction block.

The prediction of a sample P(x,y) can be derived as:

$$P(x,y) = \sum_k F(x,y,k)*r(k),$$

where r(k) is the kth item in the L-shaped template, and F(x,y) is the matrix weights corresponding to the position (x,y). The size of the prediction block generated by matrix multiplication equals to the current block size.

Conventionally, a matrix-based prediction, like the matrix-based position-dependent prediction (MPDP) in ECM software, is used when certain criteria are met, and when used, it always replaces any conventional or non-matrix-based prediction. For example, MPDP always replaces a conventional intra prediction mode when the following criteria are met:

- There exists an available matrix for the prediction direction.
- The block size is allowed for the MPDP prediction.
- Reference samples for conducting the MPDP are available.

However, always replacing a conventional or non-matrix-based prediction by a matrix-based prediction may result in a sub-optimal block prediction, e.g., in cases where the MPDP does not provide for an as accurate prediction as the conventional prediction mode or method.

Embodiments of the present disclosure addresses the drawbacks in conventional approaches by determining, when the certain criteria for using a matrix-based prediction are met, which of the matrix-based prediction and the non-matrix-based prediction performs better for predicting a block of a picture, and then apply the better performing prediction on the block. Stated differently, embodiments provide an approach, which, in addition to the determination whether the certain criteria for using a matrix-based prediction are met, further determines, in case the criteria for use of the matrix-based prediction are met, which of the matrix-based prediction and the non-matrix-based prediction performs better for predicting a block of a picture, and then applies the better performing prediction on the block.

Other embodiments of the present disclosure addresses the drawbacks in conventional approaches by combining the matrix-based prediction and the non-matrix-based prediction.

Thus, the present disclosure addresses provides various approaches for improving a prediction performance by appropriately utilizing a matrix-based prediction, like MPDP, and a conventional or non-matrix-based prediction intra prediction for a coding block. The present disclosure is advantageous as the prediction performance is improved by appropriately making use of a matrix-based prediction and/or a non-matrix-based prediction intra prediction.

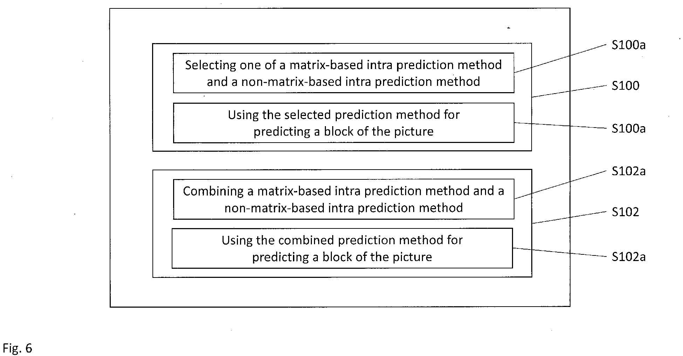

Fig. 6 illustrates a flow diagram of an embodiment of a method of processing one or more blocks of a picture. The method includes one or more of the following:

S100: Selecting S 100a one of a matrix-based intra prediction method and a non-matrix-based intra prediction method, and using S 100b the selected prediction method for predicting a block of the picture.

S102: Combining S102a a matrix-based intra prediction method and a non-matrix-based intra prediction method and using S10 2b the combined prediction method for predicting a block of the picture.

Thus, embodiments, of the present disclosure allow for using a matrix-based and/or a non-matrix-based intra prediction method for predicting the block, namely using the better performing one of the matrix-based method and the non-matrix-based intra prediction methods, or combining the matrix-based and non-matrix-based intra prediction methods are combined.

In the following description of embodiments of the present disclosure, the term conventional or non-matrix based intra prediction refers to angular and non-angular (planar and DC) prediction modes which do not use matrix-based mechanism for sample prediction. Further, the matrix-based position-dependent prediction (MPDP) of JVET-AH0209 is used as an example of a matrix-based prediction throughout following description of embodiments of the present disclosure. However, the present disclosure is not limited to the above matrix based and non-matrix based intra prediction. In accordance with other embodiments, the inventive approach may be used for other matrix-based intra prediction methods, e.g., when such other matrix-based intra prediction methods are used to replace conventional intra prediction methods and/or include a mechanism that maps the defined matrices to a corresponding conventional intra prediction mode.

In accordance with embodiments of the present disclosure, for an intra-coded block, the choice of the matrix-based position-dependent prediction (MPDP) and the conventional intra prediction methods may be indicted explicitly by a block level flag in a bitstream.

In accordance with embodiments of the present disclosure, the use of a MPDP-based prediction and a conventional prediction is determined at the encoder side through a rate-distortion optimization (RDO) and the best performing method is indicated by a block level flag or an index in a bitstream.

In accordance with embodiments of the present disclosure, the use of a MPDP-based prediction and a conventional prediction is determined at the encoder side through rate-distortion optimization (RDO) and the best performing method is indicated by a block level flag or index in a bitstream: However, a status of the flag or index is decided at the decoder side based on the template costs of the MPDP and the conventional intra prediction methods of the block, e.g. during a reconstruction stage.

In accordance with embodiments of the present disclosure, the best performing method, between the MPDP and the conventional predictions, is indicated in a bitstream by a flag or index. However, a status of the indicator information is decided in the block reconstruction stage of a decoder by using a template-based reordering mechanism. In other words, the indication, like a certain value of the signaled flag or index, may refer to either of the MPDP or conventional prediction method depending on the prediction performance of these methods on the block's template samples.

In accordance with embodiments of the present disclosure, the best method among the MPDP and the conventional prediction methods is not indicated in the bitstream but is determined at the decoder side using the template costs of the two methods.

In accordance with embodiments of the present disclosure, the choice of prediction method may be determined implicitly at the decoder side based on the template cost of each method.

In accordance with embodiments of the present disclosure, the block's template may be predicted using both the MPDP and the conventional prediction methods and the method with the lowest prediction cost on the template is selected to be used in the block prediction.

In accordance with embodiments of the present disclosure, the template refers to reconstructed samples from a neighborhood of the block.

In accordance with embodiments of the present disclosure, the template, where distortion is calculated or determined, is the same in both methods.

In accordance with embodiments of the present disclosure, at the decoder side an implicit (no signaling required) fusion of both the MPDP and the conventional predictions is applied, where the fusion weights may be derived from the template costs of each of the two predictions.

In accordance with embodiments of the present disclosure, the block prediction is obtained by combining or blending the prediction samples of the MPDP and the conventional prediction methods.

In accordance with embodiments of the present disclosure, the blending weights may be fixed values, or they may be calculated or determined based on the distortion cost of each method on the template.

In accordance with embodiments of the present disclosure, the fusion of the conventional and the MPDP predictions is indicated explicitly through a block-level flag in a bitstream.

In accordance with embodiments of the present disclosure, the fusion of the conventional and the MPDP predictions is determined implicitly in the decoder side, e.g., based on one or more of the following:

- Block dimensions: for block sizes larger than certain threshold, the fusion method may be decided to be used.
- Template costs: the prediction performance over the block template may be calculated or determined for both conventional and MPDP method and based on the template cost of each method the codec may decide to use standalone prediction method or the fusion approach. For example, if the template costs of the two methods are relatively similar (based on certain threshold), then the fusion mode may be decided to be used, otherwise the method with better prediction performance on the template is decided to be used for the block.

In accordance with embodiments of the present disclosure, one or more high-level syntax elements (HLS), such as SPS, VPS, PPS, are defined for the codec that enables or disables one or more of the processes of the present disclosure in certain granularities such as entire sequence, and entire picture, etc.

Further embodiments of the present disclosure are now described in more detail.

*Explicit signaling*

In accordance with an embodiment, the best performing method among the matrix-based position-dependent prediction (MPDP) and the conventional prediction methods for a given IPM is decided explicitly. An encoder may decide the best method for a block according to an RDO mechanism, and a flag is then signaled in a bitstream to indicate the selected method to a decoder.

In accordance with embodiments, an indication, e.g., a flag or an index, which is an explicit indication of the matrix-based intra prediction method or of the non-matrix-based intra prediction method, is obtained from a data stream, and for predicting the block, the prediction method is used which is explicitly signaled by the indication.

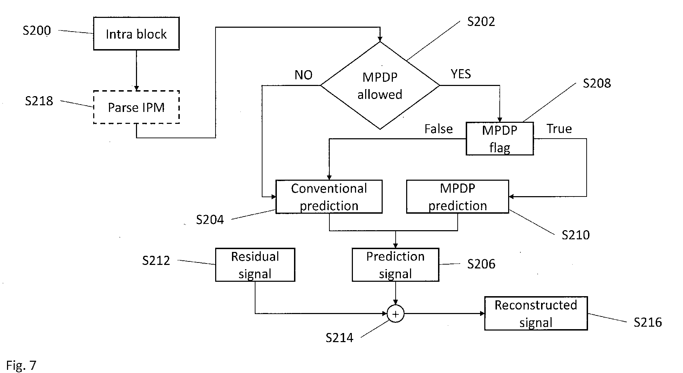

Fig. 7 illustrates a decoder side process of explicit signaling in accordance with an embodiment of the present disclosure. A data stream, e.g., a bitstream, which includes data representing an intra block of the picture to be decoded, is received S200. At S202 it is determined whether the matrix-based intra prediction method, e.g., MPDP, is allowed. For example, the matrix-based intra prediction method is allowed when one or more of the following criteria are met: (1) A matrix-based intra prediction is available for a prediction direction. (2) A block size is allowed for the matrix-based intra prediction. (3) Reference samples for conducting the matrix-based intra prediction are available. If the MPDP is not allowed (NO), a conventional prediction method is performed S204 for obtaining a prediction signal S206 for the intra block. If the MPDP is allowed (YES), the data stream is parsed for the explicit indication, like the MPDP flag, for determining S208 whether the explicit indication indicates the MPDP or not. If the MPDP flag is true the MPDP prediction method is performed S210 for obtaining the prediction signal S206 for the intra block. If the MPDP flag is false the conventional prediction method is performed S204 for obtaining the prediction signal S206 for the intra block. The prediction signal and a residual signal S212 are combined S214 for obtaining a reconstructed signal S216 representing the reconstructed block.

In accordance with embodiments, the IPM for the block may be determined in various existing methods. In accordance with embodiments, the IPM may be determined in the parsing stage of flags through parsing S218 of the mode from an MPM list. In accordance with other embodiments, the IPM may be determined later on in the block reconstruction phase using texture analysis methods such as DIMD and TIMD.

*Explicit signaling with template-based reordering mechanism*

In accordance with an embodiment, similar to the above described embodiment using the explicit signaling, the best performing method is indicated in the bitstream by a flag or index. However, the status of the indicator information is decided at the decoder, e.g., in a block reconstruction stage by using a template-based reordering mechanism. Thus, the indication information may not be known at the decoder when parsing these information from the bitstream, however, it is known later when doing a sample reconstruction by applying the template cost based method described herein. In other words, the indication, like a certain value of the signaled flag or index, may refer to either of the MPDP or conventional prediction method depending on the prediction performance of these methods on the block's template samples. Stated differently, in accordance with embodiments, the indication received includes a mode index, i.e., indicates an IPM for the block, but not whether the actual prediction is matrix or non-matrix based. This is decided by an evaluation of the template costs, more specifically, the template costs for one or more matrix/non-matrix based methods. The template cost determination is independent from what has been signaled by the indication. The indication is used for selecting the prediction method, more specifically, the prediction having the lowest costs and matching the signaled IPM is selected.

In accordance with embodiments, an indication, e.g., a flag or an index, which indicates an intra prediction mode for predicting the block, is obtained from a data stream, and for predicting the block. Then the prediction method, which causes the lowest template costs and matches the indicated intra prediction mode, is selected from one or more matrix-based intra prediction methods and one or more non-matrix-based intra prediction methods. The template costs of the matrix-based intra prediction method and the non-matrix-based intra prediction method are determined by applying the matrix-based intra prediction method and the non-matrix-based intra prediction method to template samples of the block for re-predicting the template samples, determining template prediction distortion costs of each prediction method compared to reconstructed template samples, and selecting the prediction method having the lowest template prediction distortion costs and referring to the intra prediction mode indicated by the indication parsed from the data stream.

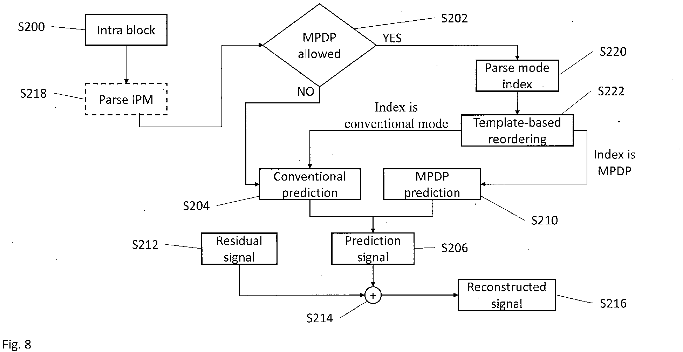

Fig. 8 illustrates a decoder side process of explicit signaling with a template-based reordering mechanism in accordance with an embodiment of the present disclosure. A data stream, e.g., a bitstream, which includes data representing an intra block of the picture to be decoded, is received S200. At S202 it is determined whether the matrix-based intra prediction method, e.g., MPDP, is allowed. For example, the matrix-based intra prediction method is allowed when one or more of the following criteria are met: (1) A matrix-based intra prediction is available for a prediction direction. (2) A block size is allowed for the matrix-based intra prediction. (3) Reference samples for conducting the matrix-based intra prediction are available. If the MPDP is not allowed (NO), a conventional prediction method is performed S204 for obtaining a prediction signal S206 for the intra block. If the MPDP is allowed (YES), the data stream is parsed for a mode index S220 and at S222 it is determined, using the mode index and template costs of the MPDP prediction method and the conventional intra prediction method, whether the index is MPDP or conventional mode. If the index is MPDP, the MPDP prediction method is performed S210 for obtaining the prediction signal S206 for the intra block. If the index is conventional mode, the conventional prediction method is performed S204 for obtaining the prediction signal S206 for the intra block. The prediction signal and a residual signal S212 are combined S214 for obtaining a reconstructed signal S216 representing the reconstructed block.

In accordance with embodiments, the IPM for the block may be determined in various existing methods. In accordance with embodiments, the IPM may be determined in the parsing stage of flags through parsing S218 of the mode from an MPM list. In accordance with other embodiments, the IPM may be determined later on in the block reconstruction phase using texture analysis methods such as DIMD and TIMD.

When assuming that a mode index of "1" is parsed from the bitstream in the parsing phase, in the stage of bitstream parsing it is not known whether this mode index refers to the MPDP method or the conventional prediction method. In the block reconstruction stage, both MPDP and conventional prediction methods are applied over the template samples of the block in which the template samples are re-predicted using these prediction methods. Then, the prediction distortion costs of each prediction method are calculated or determined compared to the reconstructed samples in the template. A list of the two prediction methods is created and then sorted in descending order of the template prediction distortion costs. Finally, the prediction method in the reordered list that refers to the parsed mode index "1" is selected and used for block prediction.

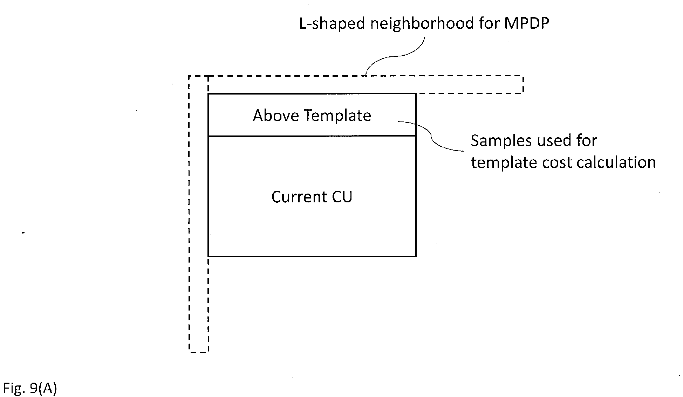

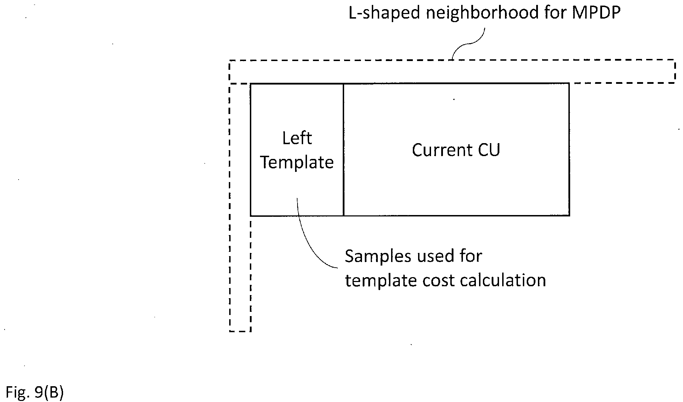

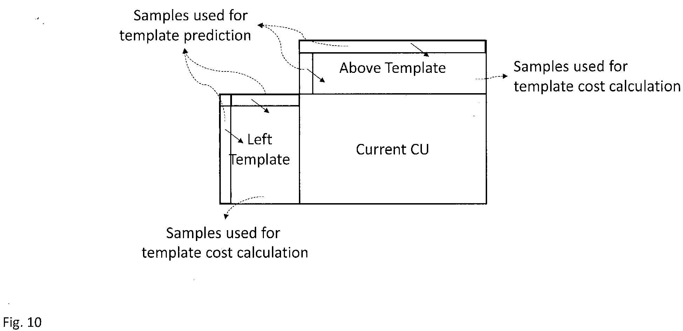

In this example, the template is a template area above and/or left, and the template area above and/or left refer to the reconstructed samples from the block neighborhood. Fig. 9(A) and Fig. 9(B) illustrate examples of a template prediction using the MPDP method, with Fig. 9(A) illustrating an above template prediction using the MPDP method, and Fig. 9(B) illustrating a left template prediction using the MPDP method. In Fig, 9(A) and Fig. 9(B), the L-shaped template for the MPDP is used for predicting the "left template" and "above template" samples. However, when it comes to actual block prediction using the MPDP method, the L-shaped template that is illustrated in Fig. 5 will be used. Fig. 10 illustrates an example of a template prediction using a conventional prediction methods, such as TIMD.

In accordance with embodiments, in order to have comparable template costs between the MPDP and the conventional predictions, the template areas for the cost calculation or determination may remain the same. Alternatively, if the template areas for the cost calculation or determination of the two methods have different sizes, the calculated or determined costs may be normalized based on the number of pixels in each template.

In accordance with embodiments, the cost or distortion calculation or determination over the template may use one or more of the distortion metrics such as sum of absolute differences (SAD), sum of square errors (SSE), sum of absolute transform differences (SATD) or any other method. Further, the template size may be fixed size, or it may be determined based on block size.

*Implicit mode derivation*

The methods in accordance with the embodiments described above require signaling the information about the prediction method in the bitstream for every block. This may not be optimal in some cases as the signaling overhead may reduce the benefit of using MPDP and conventional prediction separately. In accordance with an embodiment, the usage of the appropriate prediction method to be used may be implicitly determined at the decoder side instead of explicitly signaling the related information.

In accordance with an embodiment, at a decoder, for predicting the block, the prediction method, which causes the lowest template costs, is selected from one or more matrix-based intra prediction methods and one or more non-matrix-based intra prediction methods.

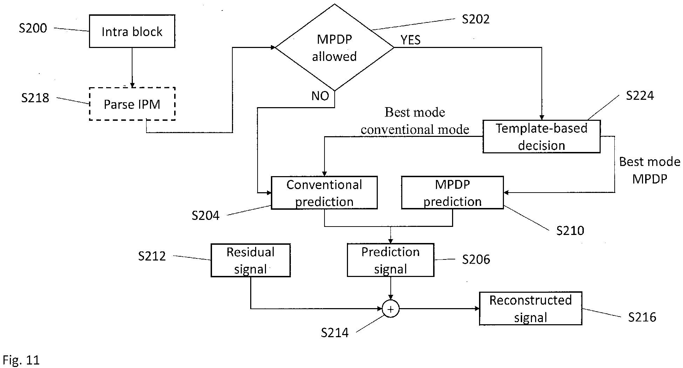

Fig. 11. illustrates a decoder side process of an implicit, template-based derivation for an MPDP or a conventional prediction in accordance with an embodiment of the present disclosure. A data stream, e.g., a bitstream, which includes data representing an intra block of the picture to be decoded, is received S200. At S202 it is determined whether the matrix-based intra prediction method, e.g., MPDP, is allowed. For example, the matrix-based intra prediction method is allowed when one or more of the following criteria are met: (1) A matrix-based intra prediction is available for a prediction direction. (2) A block size is allowed for the matrix-based intra prediction. (3) Reference samples for conducting the matrix-based intra prediction are available. If the MPDP is not allowed (NO), a conventional prediction method is performed S204 for obtaining a prediction signal S206 for the intra block. If the MPDP is allowed (YES), S224 it is determined, using a template-based decision, e.g., the template costs of the MPDP prediction method and the conventional intra prediction method, whether the best mode is MPDP or conventional mode. If the best mode is MPDP, the MPDP prediction method is performed S210 for obtaining the prediction signal S206 for the intra block. If the best mode is conventional mode, the conventional prediction method is performed S204 for obtaining the prediction signal S206 for the intra block. The prediction signal and a residual signal S212 are combined S214 for obtaining a reconstructed signal S216 representing the reconstructed block.

In accordance with embodiments, the IPM for the block may be determined in various existing methods. In accordance with embodiments, the IPM may be determined in the parsing stage of flags through parsing S218 of the mode from an MPM list. In accordance with other embodiments, the IPM may be determined later on in the block reconstruction phase using texture analysis methods such as DIMD and TIMD.

Thus, for a given IPM, when the MPDP applicability criteria has been met (S202 - YES), the template prediction (S224) using the MPDP method and conventional prediction method is conducted, similar to the template-based prediction described above with reference to Fig. 8. Then, the prediction method that provides best performance, e.g., lowest distortion cost, on the template is selected and used for block prediction. In accordance with embodiments, the template costs of the MPDP method and the conventional prediction method are determined by applying the MPDP and the conventional prediction methods to template samples of the block for re-predicting the template samples, e.g., samples from the template area(s) described above with reference to Fig. 9(A), Fig. 9(B) and Fig. 10. Then the template prediction distortion costs of each prediction method compared to reconstructed template samples are determined, and the prediction method having the lowest template prediction distortion costs is selected.

When comparing the template costs of the MPDP and conventional methods, there may be a threshold considered for selecting the best mode. For example, if the prediction cost of the MPDP method is lower than a certain threshold (e.g., 1.2x) of the conventional prediction method then MPDP is determined to be the best mode or vice versa.

The template is a template area above and/or left, and the template area above and/or left refer to the reconstructed samples from the block neighborhood. Fig. 9(A) and Fig. 9(B) illustrate examples of a template prediction using the MPDP method, with Fig. 9(A) illustrating an above template prediction using the MPDP method, and Fig. 9(B) illustrating a left template prediction using the MPDP method. In Fig, 9(A) and Fig. 9(B), the L-shaped template for the MPDP is used for predicting the "left template" and "above template" samples. However, when it comes to actual block prediction using the MPDP method, the L-shaped template that is illustrated in Fig. 5 will be used. Fig. 10 illustrates an example of a template prediction using a conventional prediction methods, such as TIMD.

In accordance with embodiments, in order to have comparable template costs between the MPDP and the conventional predictions, the template areas for the cost calculation or determination may remain the same. Alternatively, if the template areas for the cost calculation or determination of the two methods have different sizes, the calculated or determined costs may be normalized based on the number of pixels in each template.

In accordance with embodiments, the cost or distortion calculation or determination over the template may use one or more of the distortion metrics such as sum of absolute differences (SAD), sum of square errors (SSE), sum of absolute transform differences (SATD) or any other method. Further, the template size may be fixed size, or it may be determined based on block size.

*Fusion of MPDP and conventional prediction*

In accordance with an embodiment, a final block prediction is obtained by combining or using a fusion of MPDP prediction with the conventional intra prediction method. Such a fusion method may combine the benefit from both prediction methods and, thereby may provide a more accurate prediction for the entire block compared to using a standalone method, i.e., the MPDP only or the conventional prediction only.

In accordance with embodiments, for a given block in a certain IPM two distinct predictions may be generated and combined or blended using blending weights. In accordance with embodiments, a first prediction is obtained by a conventional intra prediction method and a second prediction is obtained by the MPDP method. Then, the final block prediction is calculated or determined by blending or fusing the two predictions as below:

$$Pred_{(x,y)} = \left( \omega_1 \times Pred_{1(x,y)} + \omega_2 \times Pred_{2(x,y)} \right) \gg shift$$

where $Pred_{(x,y)}$ is the final block prediction at location (x, y), and $w_1$ and $w_2$ are the blending weights for the first and second predictions, respectively, *shift* is the bit-shift to the right operation and is used for normalizing the blended prediction.

In accordance with embodiments, the fusion weights may be determined to be always fixed. In accordance with other embodiments, the fusion weights may be decided at the encoder side through an RDO process and may be signaled in the bitstream. In accordance with yet other embodiments, a set of blending or fusion weights may be defined in the codec and the encoder selects the best performing set of fusion weights, e.g., using an RDO process, among the pre-defined set and the indices of the selected weights are signaled in the bitstream.

In accordance with further embodiments, the fusion weights may be implicitly determined at the decoder side. In accordance with embodiments, the template-based method described above with reference to Fig. 8 to Fig. 11 may be utilized so that the fusion weight of each prediction method is determined with respect to its distortion cost over the block's template. Let $costMode_1$ be the distortion cost of the conventional intra prediction over the template and $costMode_2$ be the distortion cost of the MPDP prediction over the template, then, the fusion weights may be calculated or determined as:

$$\omega_1 = \frac{costMode_2}{costMode_1 + costMode_2}$$

$$\omega_2 = 1 - \omega_1$$

In accordance with embodiments, the fusion of the MPDP and the conventional intra predictions may be applied always when either of the standalone prediction methods is selected for a block. In accordance with embodiments, there may not be any indicators for MPDP modes through signaling mechanisms so that the codec may implicitly decide to always combine the predictions resulted with conventional methods and their equivalent MPDP methods.

In accordance with further embodiments, the fusion method may be enabled/disabled explicitly using a block level flag.

In accordance with yet further embodiments, the usage of the fusion method may be determined implicitly at the decoder side using the template cost-based approach. In accordance with embodiments, the template cost of the two standalone prediction methods may be calculated or determined and if the distortion cost of the prediction methods is in a similar range, e.g., at or below a certain threshold, compared to each other, then the fusion method may be determined to be applied for the block prediction. Otherwise, if the template cost of one prediction method is better than the other one, e.g., smaller than a certain threshold, then that prediction method is selected to be used for block prediction.

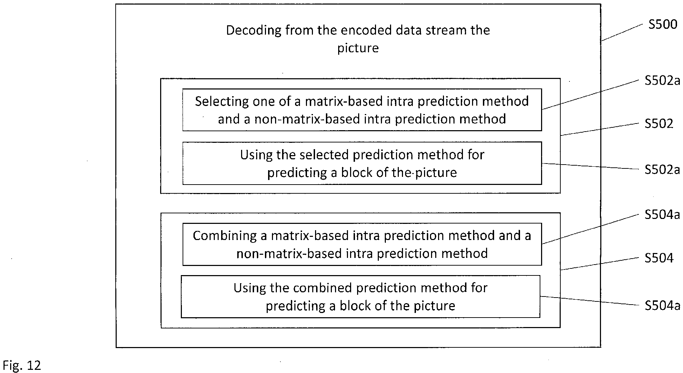

Fig. 12 illustrates a flow diagram of a method for decoding an encoded data stream, the encoded data stream including data representing a picture. The method includes the following:

S500: Decoding from the encoded data stream the picture.

Decoding the picture comprises one or more of the following: S502: (1) Selecting S502a one of a matrix-based intra prediction method and a non-matrix-based intra prediction method, and using S502b the selected prediction method for predicting a block of the picture. (2) S504: Combining S504a a matrix-based intra prediction method and a non-matrix-based intra prediction method and using S504b the combined prediction method for predicting a block of the picture.

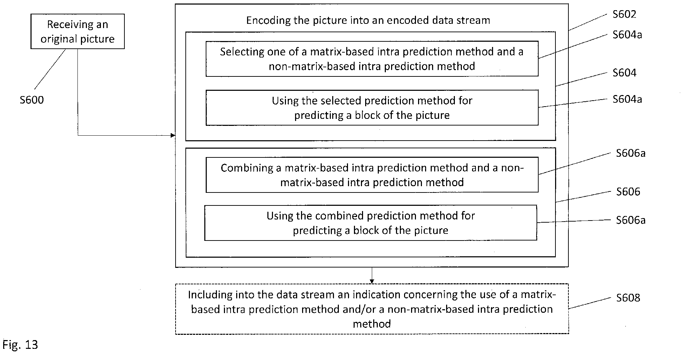

Fig. 13 illustrates a flow diagram of a method for encoding a picture into an encoded data stream. The encoded data stream includes data representing the picture and the method includes the following:

S600: Receiving an original picture.
S602: Encoding the picture into the encoded data stream.

Encoding the picture comprises one or more of the following: S604: (1) Selecting S604a one of a matrix-based intra prediction method and a non-matrix-based intra prediction method, and using S604b the selected prediction method for predicting a block of the picture. (2) S606: Combining S606a a matrix-based intra prediction method and a non-matrix-based intra prediction method and using S606b the combined prediction method for predicting a block of the picture.

Optionally, the method comprises including S608 into the data stream or bitstream an indication concerning the use of a matrix-based intra prediction method and/or a non-matrix-based intra prediction method, e.g.,

- an indication, e.g., a flag or an index, the indication indicating a matrix-based intra prediction method or a non-matrix-based intra prediction method to be used for predicting a block of the picture, and/or
- an indication, e.g., a flag or an index, the indication indicating blending weights to be used for obtaining a combination of a matrix-based intra prediction method or a non-matrix-based intra prediction method, which is to be used for predicting a block of the picture.

Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

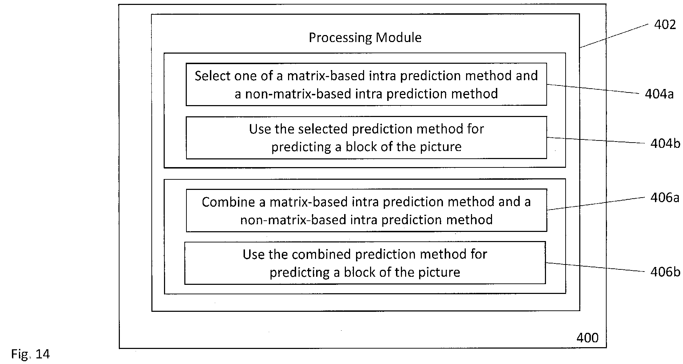

Fig. 14 illustrates a block diagram of an apparatus 400 of predicting one or more blocks of a picture in accordance with embodiments of the present disclosure. The apparatus 400 includes a processing module 402. The processing module is configured to

- select 404a one of a matrix-based intra prediction method and a non-matrix-based intra prediction method, and use 404b the selected prediction method for predicting a block of the picture, or
- combine 406a a matrix-based intra prediction method and a non-matrix-based intra prediction method and use 406b the combined prediction method for predicting a block of the picture.

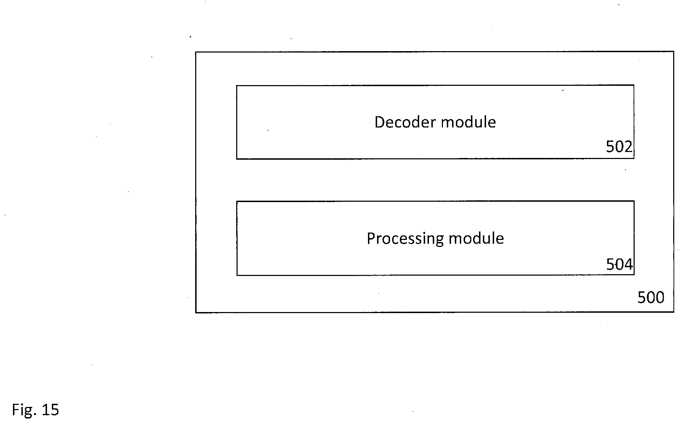

Fig. 15 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A processing module, e.g., a prediction module 170 as depicted in Fig. 2. The prediction module 502 is configured to operate in accordance with embodiments of the present disclosure. For example, the prediction module 502 includes an apparatus as described with reference to Fig. 14.

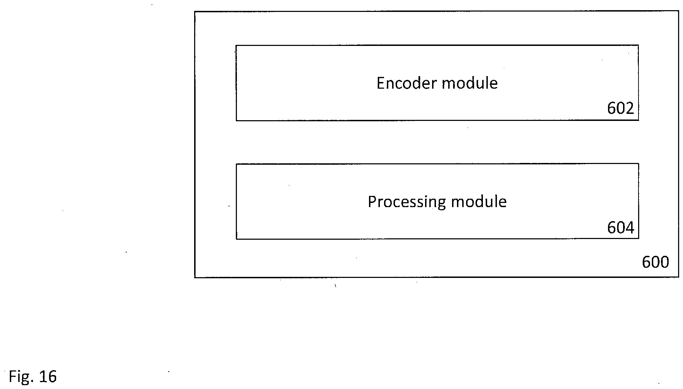

Fig. 16 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A prediction module, e.g., a prediction module 124 as depicted in Fig. 1. The prediction module 602 is configured to operate in accordance with embodiments of the present disclosure. For example, the prediction module 502 includes an apparatus as described with reference to Fig. 14.

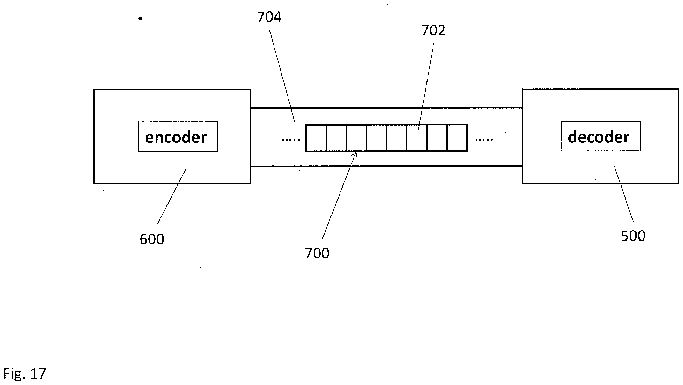

Fig. 17 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may be an indication concerning the use of a matrix-based intra prediction method and/or a non-matrix-based intra prediction method, e.g.,

- an indication, e.g., a flag or an index, the indication indicating a matrix-based intra prediction method or a non-matrix-based intra prediction method to be used for predicting a block of the picture, and/or
- an indication, e.g., a flag or an index, the indication indicating blending weights to be used for obtaining a combination of a matrix-based intra prediction method or a non-matrix-based intra prediction method, which is to be used for predicting a block of the picture.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

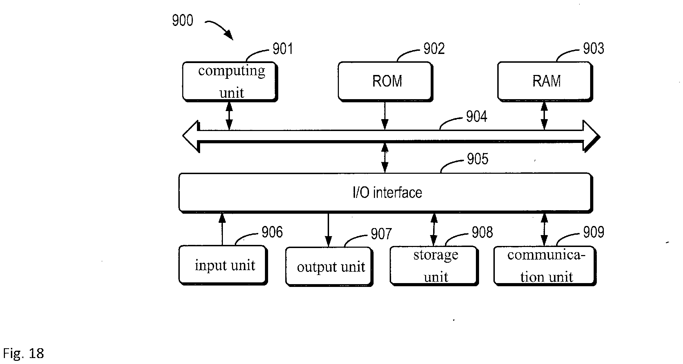

Fig. 18 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides the method of processing one or more blocks of a picture, the method comprising:

selecting one of a matrix-based intra prediction method and a non-matrix-based intra prediction method, and using the selected prediction method for predicting a block of the picture, or
combining a matrix-based intra prediction method and a non-matrix-based intra prediction method and using the combined prediction method for predicting a block of the picture.

A 2nd embodiment provides the method of the 1st embodiment, wherein the method comprises: determining whether using the matrix-based intra prediction method is allowed, and, if using the matrix-based intra prediction method is allowed, selecting one of the matrix-based intra prediction method and the non-matrix-based intra prediction method, or combining the matrix-based intra prediction method and the non-matrix-based intra prediction method.

A 3rd embodiment provides the method of the 1st embodiment or the 2nd embodiment, wherein, at an encoder, the prediction method is selected based on a performance of the matrix-based intra prediction method and the non-matrix-based intra prediction method, e.g., by using a rate-distortion optimization (RDO), and an indication of the selected prediction method, e.g., a flag or an index, is included into a data stream.

A 4th embodiment provides the method of the 1st embodiment or the 2nd embodiment, wherein, at a decoder, an indication, e.g., a flag or an index, is obtained from a data stream, and the prediction method to be used for predicting the block is determined using the indication.

A 5th embodiment provides the method of the 4th embodiment, wherein the prediction method to be used for predicting the block is determined using

- the indication only, wherein the indication is an explicit indication of the matrix-based intra prediction method or of the non-matrix-based intra prediction method, or
- the indication and template costs of the matrix-based intra prediction method and the non-matrix-based intra prediction method, wherein the indication may be certain value referring to either one of the matrix-based intra prediction method or the non-matrix-based intra prediction method.

A 6th embodiment provides the method of the 5th embodiment, wherein the method comprises:

- parsing the data stream for the explicit indication, e.g., a bitstream which includes data representing the picture,
- determining whether the explicit indication indicates the matrix-based intra prediction method or the non-matrix-based intra prediction method,
- if the explicit indication indicates the matrix-based intra prediction method, performing the matrix-based intra prediction method for obtaining a prediction signal for the block, and
- if the explicit indication indicates the non-matrix-based intra prediction method, performing the non-matrix-based intra prediction method for obtaining the prediction signal for the block.

A 7th embodiment provides the method of the 5th embodiment, wherein the method comprises:

- parsing the data stream for the indication, e.g., a bitstream which includes data representing the picture,
- determining, using the indication and the template costs of the matrix-based intra prediction method and the non-matrix-based intra prediction method, whether the indication indicates the matrix-based intra prediction method or the non-matrix-based intra prediction method,
- if the indication indicates the matrix-based intra prediction method, performing the matrix-based intra prediction method for obtaining a prediction signal for the block, and

- if the indication indicates the non-matrix-based intra prediction method, performing the non-matrix-based intra prediction method for obtaining the prediction signal for the block.

An 8th embodiment provides the method of the 7th embodiment, wherein the template costs of the matrix-based intra prediction method and the non-matrix-based intra prediction method are determined by

- applying the matrix-based intra prediction method and the non-matrix-based intra prediction method to template samples of the block for re-predicting the template samples,
- determining template prediction distortion costs of each prediction method compared to reconstructed template samples,
- sorting the prediction methods in descending order of the template prediction distortion costs, and
- selecting the prediction method that refers to the indication parsed from the data stream.

A 9th embodiment provides the method of the 1st embodiment or the 2nd embodiment, wherein a data stream received at a decoder includes no indication of the matrix-based intra prediction method or the non-matrix-based intra prediction method, and wherein, at a decoder, the prediction method to be used for predicting the block is determined implicitly using template costs of the matrix-based intra prediction method and the non-matrix-based intra prediction method.

A 10th embodiment provides the method of the 1st, 2nd or 9th embodiment, wherein, at a decoder, the prediction method to be used for predicting the block is determined by

- determining, using the template costs of the matrix-based intra prediction method and the non-matrix-based intra prediction method, whether the matrix-based intra prediction method or the non-matrix-based intra prediction method is to be used for the prediction,
- if the matrix-based intra prediction method is to be used, performing the matrix-based intra prediction method for obtaining a prediction signal for the block, and
- if the non-matrix-based intra prediction method is to be used, performing the non-matrix-based intra prediction method for obtaining the prediction signal for the block.

An 11th embodiment provides the method of the 10th embodiment, wherein the template costs of the matrix-based intra prediction method and the non-matrix-based intra prediction method are determined by

- applying the matrix-based intra prediction method and the non-matrix-based intra prediction method to template samples of the block for re-predicting the template samples,
- determining template prediction distortion costs of each prediction method compared to reconstructed template samples, and
- selecting the prediction method having the lowest template prediction distortion costs.

A 12th embodiment provides the method of the 8th embodiment or the 11th embodiment, wherein the reconstructed template samples are from a template area above and/or left of the block, and wherein the template areas for determining the template prediction distortion costs are the same.

A 13th embodiment provides the method of the 8th embodiment or the 11th embodiment, wherein the reconstructed template samples are from a template area above and/or left of the block, and wherein the template areas for determining the template prediction distortion costs are different, and wherein the determined template prediction distortion costs are normalized on a number of pixels in each template area.

A 14th embodiment provides the method of any one of the 8th and 11th to 13th embodiments, wherein the template prediction distortion costs are determined using one or more of distortion metrics, e.g., a sum of absolute differences (SAD), s sum of square errors (SSE), or a sum of absolute transform differences (SATD).

A 15th embodiment provides the method any one of the 8th and 11th to 14th embodiments, wherein a size of the template area is a fixed size or is a size based on a size of the block.

A 16th embodiment provides the method of any one of the 6th to 8th and 9th to 15th embodiments, wherein the method comprises: combining the prediction signal and a residual signal for obtaining a reconstructed signal representing the reconstructed block.

A 17th embodiment provides the method of any one of the preceding embodiments, wherein the method comprises:

- determining whether the matrix-based intra prediction method is allowed, and
- if the matrix-based intra prediction method is not allowed, performing the non-matrix-based intra prediction method for obtaining the prediction signal for the block.

An 18th embodiment provides the method of the 1st embodiment or the 2nd embodiment, wherein the matrix-based intra prediction method and the non-matrix-based intra prediction method are combined at a decoder using respective blending weights.

A 19th embodiment provides the method of the 18th embodiment, wherein the method comprises:

- generating for the block in a certain intra prediction mode, IPM, a first prediction obtained by the non-matrix-based intra prediction method, and a second prediction obtained by the matrix-based intra prediction method, and
- blending the first and second predictions using the respective blending weights.

A 20th embodiment provides the method of the 19th embodiment, wherein a final block prediction is determined as follows:

$$Pred_{(x,y)} = \left(\omega_1 \times Pred_{1(x,y)} + \omega_2 \times Pred_{2(x,y)}\right) \gg shift$$

where $Pred_{(x,y)}$ is the final block prediction at a location (x, y), $\omega_1$ and $\omega_2$ are the blending weights for the first and second predictions, respectively, and *shift* is a bit-shift to the right operation used for normalizing the final block prediction.

A 21st embodiment provides the method of any one of the 18th to 20th embodiments, wherein the blending weights are fixed.

A 22nd embodiment provides the method of any one of the 18th to 20th embodiments, wherein the blending weights are signaled in a data stream, with the blending weights decided at an encoder, e.g., by using a rate-distortion optimization (RDO).

A 23rd embodiment provides the method of any one of the 18th to 20th embodiments, wherein the blending weights are selected at an encoder from a set of blending weights predefined in a codec, e.g., by using a rate-distortion optimization (RDO) for selecting the best performing blending weights among the set, and wherein an index of the selected blending weights is signaled in a data stream.

A 24th embodiment provides the method of any one of the 18th to 20th embodiments, wherein the blending weights are implicitly determined at the decoder.

A 25th embodiment provides the method of the 24th embodiment, wherein the blending weighs are determined using distortion costs of the non-matrix-based intra prediction method and the matrix-based intra prediction method over a template area of the block.

A 26th embodiment provides the method of the 25th embodiment, wherein, when costMode$_1$ is the distortion cost of the non-matrix-based intra prediction method over the template area, and costMode$_2$ is the distortion cost of the non-matrix-based intra prediction method over the template area, the blending weights are determined as follows:

$$\omega_1 = \frac{\text{costMode}_2}{\text{costMode}_1 + \text{costMode}_2}$$

$$\omega_2 = 1 - \omega_1$$

A 27th embodiment provides the method of any one of the 1st, 2nd and 18th to 26th embodiments, wherein combining the matrix-based intra prediction method and the non-matrix-based intra prediction method is applied always when either one of the matrix-based intra prediction method and the non-matrix-based intra prediction method is selected for the block.

A 28th embodiment provides the method of any one of the 1st, 2nd and 18th to 26th embodiments, wherein combining the matrix-based intra prediction method and the non-matrix-based intra prediction method is enabled/disabled explicitly, e.g., using a block level flag in a data stream.

A 29th embodiment provides the method of any one of the 1st, 2nd and 18th to 26th embodiments, wherein combining the matrix-based intra prediction method and the non-matrix-based intra prediction method is enabled implicitly at the decoder using template costs of the matrix-based intra prediction method and the non-matrix-based intra prediction method.

A 30th embodiment provides the method of the 29th embodiment, wherein

when a difference in the template costs are below a certain threshold, combining the matrix-based intra prediction method and the non-matrix-based intra prediction method is enabled, and
when the difference in the template costs are above the certain threshold, combining the matrix-based intra prediction method and the non-matrix-based intra prediction method is disabled and the prediction method with the lower template costs is used for predicting the block.

A 31st embodiment provides the method of any one of the preceding embodiments, wherein

the matrix-based intra prediction method includes a Matrix weighted Intra Prediction (MIP) method or a Matrix-based position-dependent prediction (MPDP) method, and
the non-matrix-based intra prediction method includes an angular Intra Prediction Mode (IPM) method or a non-angular Intra Prediction Mode (IPM) method.

A 32nd embodiment provides a non-transitory computer-readable storage medium comprising instructions which, when executed by a computer, cause the computer to carry out the method of any one of the preceding embodiments.

A 33rd embodiment provides an apparatus of processing one or more blocks of a picture, the apparatus comprising: a processing module, wherein the processing module is configured to

- select one of a matrix-based intra prediction method and a non-matrix-based intra prediction method, and use the selected prediction method for predicting a block of the picture, or
- combine a matrix-based intra prediction method and a non-matrix-based intra prediction method and use the combined prediction method for predicting a block of the picture.

A 34th embodiment provides an apparatus for decoding an encoded data stream, the encoded data stream including data representing a picture, the apparatus comprising:

a decoder module configured to decode from the encoded data stream the picture, and
a prediction module, the prediction module including an apparatus according to the 33rd embodiment.

A 35th embodiment provides an apparatus for encoding a picture into an encoded data stream, the encoded data stream including data representing the picture, the apparatus comprising:

an encoder module configured to receive the original picture and to encode the picture into the encoded data stream, and
a prediction module, the prediction module including an apparatus according to the 33rd embodiment.

A 36th embodiment provides a data stream having encoded thereinto a picture, wherein the data stream comprises:

an indication, e.g., a flag or an index, the indication indicating a matrix-based intra prediction method or a non-matrix-based intra prediction method to be used for predicting a block of the picture, and/or
an indication, e.g., a flag or an index, the indication indicating blending weights to be used for obtaining a combination of a matrix-based intra prediction method or a non-matrix-based intra prediction method, which is to be used for predicting a block of the picture.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

## References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1.  A method of processing one or more blocks of a picture, the method comprising:

    selecting one of a matrix-based intra prediction method and a non-matrix-based intra prediction method, and using the selected prediction method for predicting a block of the picture, or
    combining a matrix-based intra prediction method and a non-matrix-based intra prediction method and using the combined prediction method for predicting a block of the picture.

2.  The method of claim 1, wherein the method comprises:
    determining that the matrix-based intra prediction method is allowed.

3.  The method of claim 1 or 2, wherein the prediction method is selected based on a performance of the matrix-based intra prediction method and the non-matrix-based intra prediction method, e.g., by using a rate-distortion optimization (RDO), and an indication of the selected prediction method, e.g., a flag or an index, is included into a data stream.

4.  The method of claim 1 or 2, wherein

    an indication, e.g., a flag or an index, is obtained from a data stream,
    the indication is an explicit indication of the matrix-based intra prediction method or of the non-matrix-based intra prediction method, and
    for predicting the block, the prediction method is used which is explicitly signaled by the indication.

5.  The method of claim 1 or 2, wherein

    an indication, e.g., a flag or an index, is obtained from a data stream,
    the indication indicates an intra prediction mode for predicting the block, and
    for predicting the block, the prediction method, which causes the lowest template costs and matches the indicated intra prediction mode, is selected from one or more matrix-based intra prediction methods and one or more non-matrix-based intra prediction methods.

6.  The method of claim 5, wherein the template costs of the matrix-based intra prediction method and the non-matrix-based intra prediction method are determined by

    - applying the matrix-based intra prediction method and the non-matrix-based intra prediction method to template samples of the block for re-predicting the template samples,
    - determining template prediction distortion costs of each prediction method compared to reconstructed template samples, and
- selecting the prediction method having the lowest template prediction distortion costs and referring to the intra prediction mode indicated by the indication parsed from the data stream.

7. The method of claim 1 or 2, wherein, for predicting the block, the prediction method, which causes the lowest template costs, is selected from one or more matrix-based intra prediction methods and one or more non-matrix-based intra prediction methods.

8. The method of claim 7, wherein the template costs of the matrix-based intra prediction method and the non-matrix-based intra prediction method are determined by

- applying the matrix-based intra prediction method and the non-matrix-based intra prediction method to template samples of the block for re-predicting the template samples,
- determining template prediction distortion costs of each prediction method compared to reconstructed template samples, and
- selecting the prediction method having the lowest template prediction distortion costs.

9. The method of any one of claims 6 to 8, wherein the reconstructed template samples are from a template area above and/or left of the block, and wherein the template areas for determining the template prediction distortion costs are the same.

10. The method of any one of claims 6 to 8, wherein the reconstructed template samples are from a template area above and/or left of the block, and wherein the template areas for determining the template prediction distortion costs are different, and wherein the determined template prediction distortion costs are normalized on a number of pixels in each template area.

11. The method of claim 1 or 2, wherein the matrix-based intra prediction method and the non-matrix-based intra prediction method are combined using respective blending weights, e.g., by

- generating for the block in a certain intra prediction mode, IPM, a first prediction obtained by the non-matrix-based intra prediction method, and a second prediction obtained by the matrix-based intra prediction method, and
- blending the first and second predictions using the respective blending weights.

12. The method of claim 11, wherein the blending weights are

- fixed, or
- signaled in a data stream, with the blending weights decided by using, e.g., a rate-distortion optimization (RDO), or
- selected from a set of blending weights predefined in a codec, e.g., by using a rate-distortion optimization (RDO) for selecting the best performing blending weights among the set, and wherein an index of the selected blending weights is signaled in a data stream, or
- implicitly determined using distortion costs of the non-matrix-based intra prediction method and the matrix-based intra prediction method over a template area of the block.

13. The method of any one of claims 1, 2, 11 and 12, wherein combining the matrix-based intra prediction method and the non-matrix-based intra prediction method is

- applied always when either one of the matrix-based intra prediction method and the non-matrix-based intra prediction method is selected for the block, or
- enabled/disabled explicitly, e.g., using a block level flag in a data stream, or
- enabled implicitly using template costs of the matrix-based intra prediction method and the non-matrix-based intra prediction method.

14. A non-transitory computer-readable storage medium comprising instructions which, when executed by a computer, cause the computer to carry out the method of any one of the preceding claims.

15. An apparatus of processing one or more blocks of a picture, the apparatus comprising:
a processing module, wherein the processing module is configured to

- select one of a matrix-based intra prediction method and a non-matrix-based intra prediction method, and use the selected prediction method for predicting a block of the picture, or
- combine a matrix-based intra prediction method and a non-matrix-based intra prediction method and use the combined prediction method for predicting a block of the picture.

**Amended claims in accordance with Rule 137(2) EPC.**

1. A method of processing one or more blocks of a picture, the method comprising:

    selecting (S100a) one of a matrix-based intra prediction method and a non-matrix-based intra prediction method, and using (S100b) the selected prediction method for predicting a block of the picture, wherein an indication, e.g., a flag or an index, is obtained from, or written to, a data stream, wherein the indication indicates an intra prediction mode for predicting the block, and for predicting the block, the prediction method, which causes the lowest template costs and matches the indicated intra prediction mode, is selected from one or more matrix-based intra prediction methods and one or more non-matrix-based intra prediction methods.

2. The method of claim 1, wherein the method comprises:
    determining (S202) that the matrix-based intra prediction method is allowed.

3. The method of claim 1 or 2, wherein the prediction method is selected based on a performance of the matrix-based intra prediction method and the non-matrix-based intra prediction method.

4. The method of claim 3, wherein the prediction method is selected based on a performance of the matrix-based intra prediction method and the non-matrix-based intra prediction method.

5. The method of claim 1 or 2, wherein the template costs of the matrix-based intra prediction method and the non-matrix-based intra prediction method are determined by

    - applying the matrix-based intra prediction method and the non-matrix-based intra prediction method to template samples of the block for re-predicting the template samples,
    - determining template prediction distortion costs of each prediction method compared to reconstructed template samples, and
    - selecting the prediction method having the lowest template prediction distortion costs and referring to the intra prediction mode indicated by the indication parsed from the data stream.

6. The method of claim 5, wherein the reconstructed template samples are from a template area above and/or left of the block, and wherein the template areas for determining the template prediction distortion costs are the same.

7. The method of any one of claims 5 to 6, wherein the reconstructed template samples are from a template area above and/or left of the block, and wherein the template areas for determining the template prediction distortion costs are different, and wherein the determined template prediction distortion costs are normalized on a number of pixels in each template area.

8. The method of any one of the preceding claims, implemented at a decoder.

9. The method claim 8, wherein a data stream received at the decoder includes no indication of the matrix-based intra prediction method or the non-matrix-based intra prediction method, and wherein, at the decoder, the prediction method to be used for predicting the block is determined implicitly using template costs of the matrix-based intra prediction method and the non-matrix-based intra prediction method.

10. The method of any of claims 1-7, implemented at an encoder.

11. A non-transitory computer-readable storage medium comprising instructions which, when executed by a computer, cause the computer to carry out the method of any one of the preceding claims.

12. An apparatus of processing one or more blocks of a picture, the apparatus comprising:
    a processing module, wherein the processing module is configured to

select one of a matrix-based intra prediction method and a non-matrix-based intra prediction method, and use the selected prediction method for predicting a block of the picture,

wherein an indication, e.g., a flag or an index, is obtained from a data stream,

wherein the indication indicates an intra prediction mode for predicting the block, and

wherein the processing module is configured for predicting the block, the prediction method, which causes the lowest template costs and matches the indicated intra prediction mode, selected from one or more matrix-based intra prediction methods and one or more non-matrix-based intra prediction methods.

13. An apparatus for decoding an encoded data stream, the encoded data stream including data representing a picture, the apparatus comprising:

a decoder module configured to decode from the encoded data stream the picture, and
a prediction module, the prediction module including an apparatus according to claim 12.

14. An apparatus for encoding a picture into an encoded data stream, the encoded data stream including data representing the picture, the apparatus comprising:

an encoder module configured to receive the original picture and to encode the picture into the encoded data stream, and
a prediction module, the prediction module including an apparatus according to claim 12.

Input Video

104

Split into
Blocks

102

106
114
108
110
116
118
110'
122

Pre-encode
filtering
Transform
Quantization
Entropy
Coding

Output bitstream
...011011110...
120

112

Inverse
Quantization
126

144

Inverse
Transform
128

Prediction
110''

Intra
Prediction
130

110'''

Loop Filter
134

100

140

Inter
Prediction
Motion Info

Decoded Video
Signal

142

Motion
Estimation

138
136

124

Fig. 1

Fig. 2

Fig. 3

Fig. 4

Fig. 5

Selecting one of a matrix-based intra prediction method
and a non-matrix-based intra prediction method — S100a

Using the selected prediction method for
predicting a block of the picture — S100a

S100

Combining a matrix-based intra prediction method and a
non-matrix-based intra prediction method — S102a

Using the combined prediction method for
predicting a block of the picture — S102a

S102

Fig. 6

S200 — Intra block

S202

S218 — Parse IPM

NO MPDP allowed YES

S208

False MPDP flag True

Conventional prediction

MPDP prediction

S204

S210

S212 — Residual signal

Prediction signal — S206

Reconstructed signal — S216

S214

Fig. 7

Fig. 8

L-shaped neighborhood for MPDP

Above Template

Samples used for
template cost calculation

Current CU

Fig. 9(A)

L-shaped neighborhood for MPDP

| Left Template | Current CU |

Samples used for
template cost calculation

Fig. 9(B)

Fig. 10

S200 ── Intra block

S218 ── Parse IPM

MPDP allowed ── S202

YES

NO

Best mode conventional mode

Template-based decision ── S224

Best mode MPDP

Conventional prediction

MPDP prediction

S204

S210

Residual signal ── S212

Prediction signal ── S206

Reconstructed signal ── S216

S214

Fig. 11

Decoding from the encoded data stream the picture — S500

Selecting one of a matrix-based intra prediction method and a non-matrix-based intra prediction method — S502a

— S502

Using the selected prediction method for predicting a block of the·picture — S502a

Combining a matrix-based intra prediction method and a non-matrix-based intra prediction method — S504a

— S504

Using the combined prediction method for predicting a block of the picture — S504a

Fig. 12

Fig. 13

Processing Module — 402

Select one of a matrix-based intra prediction method and a non-matrix-based intra prediction method — 404a

Use the selected prediction method for predicting a block of the picture — 404b

Combine a matrix-based intra prediction method and a non-matrix-based intra prediction method — 406a

Use the combined prediction method for predicting a block of the picture — 406b

400

Fig. 14

Decoder module

502

Processing module

504

500

Fig. 15

Encoder module

602

Processing module

604

600

Fig. 16

Fig. 17

900

901
computing
unit

902
ROM

903
RAM

904

905
I/O interface

906
input unit

907
output unit

908
storage
unit

909
communica-
tion unit

Fig. 18

## EUROPEAN SEARCH REPORT

**Application Number**

EP 24 31 5540

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/002846 A1 (INTERDIGITAL CE PATENT HOLDINGS SAS [FR]) 4 January 2024 (2024-01-04) * page 29 - page 38; claim 1; figure 20A * ----- | 1-15 | INV. H04N19/11 H04N19/147 H04N19/176 H04N19/593 |
| X | WO 2024/078596 A1 (DOUYIN VISION CO LTD [CN]; BYTEDANCE INC [US]) 18 April 2024 (2024-04-18) * page 80 - page 91 * ----- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 9 May 2025 | Cordara, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 31 5540

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | | Publication date | Patent family member(s) | | Publication date |
|---|---|---|---|---|---|
| WO 2024002846 | A1 | 04-01-2024 | CN | 119452641 A | 14-02-2025 |
| | | | EP | 4548577 A1 | 07-05-2025 |
| | | | WO | 2024002846 A1 | 04-01-2024 |
| WO 2024078596 | A1 | 18-04-2024 | NONE | | |

EPO FORM P0459

For more details about this annex : see Official Journal of the European Patent Office, No. 12/82